# EUROPÄISCHE PATENTSCHRIFT

(11) **EP 2 018 949 B1**
(45) Veröffentlichungstag und Bekanntmachung des Hinweises auf die Patenterteilung: **05.12.2012**
(21) Anmeldenummer: 08161230.1
(22) Anmeldetag: 28.07.2008
(51) Int. Cl.: B29C 47/90, B29C 47/08, F16B 37/04, F16B 3/00

(54) **Passkörpernut**
Fitting groove
Rainure de passage de corps

(30) Priorität: 27.07.2007 DE 102007035347
(43) Veröffentlichungstag der Anmeldung: 28.01.2009
(73) Patentinhaber: profine GmbH, 53840 Troisdorf (DE)
(72) Erfinder: Dachs, Bernhard, 66953, Pirmasens (DE); Heilig, Michael, 66955, Pirmasens (DE); Greiner, Martin, 66955, Pirmasens (DE)
(74) Vertreter: Wübken, Ludger

(56) Entgegenhaltungen:
- EP-A1- 1 403 026
- DE-U1-202006 018 108
- US-B2- 7 175 415

## Beschreibung

### Passkörpernut

Die Erfindung betrifft ein formgebendes Element einer Extrusionseinrichtung, insbesondere eine Kalibrierscheibe oder ein Stützelement, bei dem die aneinandergrenzenden Segmente paarweise korrespondierende Passkörpernuten zur Aufnahme entsprechender Passkörper aufweisen.

### Technisches Gebiet

Extrusionsanlagen, beispielsweise zur Herstellung von Fensterprofilen, umfassen in der Regel einen Extruder zum Aufschmelzen und Homogenisieren des Kunststoff-Ansatzes sowie ein formgebendes Extrusionswerkzeug, das im Falle der Profilextrusion aus zwei Hauptkomponenten besteht, nämlich der Extrusionsdüse, in der das Profil seine wesentliche äußere und innere Form erhält, sowie einem nachfolgend angeordneten Kalibrierwerkzeug, in dem die äußere Kontur des Profils unter Abkühlung seine endgültige Form erhält.

Formgebende Extrusions-Werkzeuge werden gewöhnlich modular aufgebaut. Die Extrusionsdüse wird dabei häufig - in Extrusionsrichtung betrachtet - horizontal und/oder vertikal geteilt, wobei die einzelnen benachbarten Segmente mit ebenen Trennflächen aneinandergrenzen.

Kalibrierwerkzeuge weisen üblicherweise mehrere in Extrusionsrichtung hintereinander angeordnete Kalibrierabschnitte und Stützelemente auf, die jeweils wiederum aus mehreren einzelnen Segmenten mit ebenen Trennflächen zusammengesetzt sind.

Die einzelnen mit ebenen Trennflächen aneinandergrenzenden Segmente der formgebenden und/oder stützenden Elemente eines Extrusions-Werkzeuges müssen beim Zusammenbau exakt zueinander in ihrer relativen Position fixiert und/oder justiert werden, um die Profilgeometrie des zu extrudierenden Profils genau einzustellen. Insbesondere bei Werkzeuganpassungen, geringfügigen Änderungen der Profilgeometrie oder auch zum Ausgleich von Fertigungstoleranzen ist es gelegentlich notwendig, die relative Position zweier aneinandergrenzender Teile eines solchen formgebenden und/oder stützenden Elementes eines Extrusions-Werkzeuges zu ändern bzw. neu zu justieren.

### Stand der Technik

In der EP 1 403 026 A1 ist zu diesem Zweck ein Set von Passkörpern mit unterschiedlichem seitlichen Versatz vorgeschlagen worden gemäß dem Oberbegriff des Anspruchs 1, um ein Fixieren und/oder Justieren der relativen Position wenigstens zweier an einer ebenen Trennfläche aneinandergrenzender Teilbereiche eines formgebenden und/oder stützenden Elementes einer Extrusionsanlage zu ermöglichen.

Bei dieser Justierung der einzelnen Segmente untereinander ist es gelegentlich notwendig, nicht nur den seitlichen Versatz, sondern auch die Höhe eines oder mehrerer Segmente dadurch zu verringern, dass eine oder mehrere der ebenen Trennflächen zwischen den einzelnen Segmenten spanend bearbeitet werden. Hierdurch verringert sich jedoch die Tiefe der in der bearbeitenden Trennfläche eingearbeiteten Passkörpernut, so dass auch diese entsprechend vertieft werden muss, um das Einsetzen eines Passkörpers mit definierter Höhe zu ermöglichen.

Da die Passkörpernuten zum einwandfreien Sitz der Passkörper eine hohe Genauigkeit insbesondere im Bezug auf die Breite und Position - in der Regel im Bereich von bis zu 5 µm - aufweisen müssen, ist das Vertiefen der bereits vorhandenen Passkörpernut unter Einhaltung dieser Toleranz sehr aufwendig.

### Aufgabe

Aufgabe der vorliegenden Erfindung ist es daher, bei formgebenden und/oder stützenden Elementen einer Extrusionseinrichtung dieses Problem zu beheben.

### Darstellung der Erfindung

Die Erfindung löst diese Aufgabe durch ein formgebendes bzw. stützendes, aus wenigstens zwei an einer ebenen Trennfläche aneinandergrenzenden Segmenten bestehendes Element einer Extrusionseinrichtung, bei dem die aneinandergrenzenden Segmente paarweise korrespondierende Passkörpernuten zur Aufnahme entsprechender Passkörper aufweisen, und wobei die Passkörpernuten durch senkrecht zur Trennfläche verlaufende Passflächen und eine parallel zur Trennfläche verlaufende Auflagefläche begrenzt werden, wobei bei wenigstens einer der Passkörpernuten die Passflächen in Richtung senkrecht zur Auflagefläche über die Auflagefläche hinaus insbesondere unter Bildung seitlicher Stichnuten vertieft sind, gemäß dem kennzeichnenden Teil des Anspruchs 1.

Der Kern der vorliegenden Erfindung liegt somit in der Verwendung einer Passkörpernut mit seitlichen Vertiefungen, insbesondere in Form von Stichnuten.

Bevorzugtes Anwendungsgebiet für die vorliegende Erfindung sind Kalibrierscheiben bzw. Stützelemente. Diese werden ganz überwiegend durch Drahterodieren hergestellt. Durch Drahterodieren können mit relativ geringem Aufwand sehr hohe Genauigkeiten und nahezu beliebige Konturen hergestellt werden, so dass das Einschneiden der Passkörpernuten mit den erfindungsgemäßen seitlichen Vertiefungen ohne nennenswerten Mehraufwand vonstatten geht.

Soweit nach dem Zusammensetzen der formgebenden oder stützenden Elemente der Extrusionseinrichtung beim Einfahren der Anlage Korrekturen notwendig werden, die eine fräsende oder schleifende Bearbeitung einer der Trennflächen der aneinandergrenzenden Segmente beinhalten, kann im gleichen Arbeitsgang mit dem gleichen Werkzeug auch die in der Trennfläche eingearbeitete Passkörpernut in ihrer Tiefe nachgearbeitet werden, um die ursprüngliche Tiefe der Passkörpernut wieder herzustellen. Der Fräser o. dgl. braucht dabei nur die Auflagefläche zwischen den beiden seitlichen Vertiefungen (Stichnuten) bearbeiten, so dass die seitlichen Passflächen der Passkörpernut nicht bearbeitet werden und damit ihre ursprüngliche Passung und Position beibehalten. Das Vertiefen der Passkörpernuten ist somit mit sehr geringem Aufwand möglich.

### Kurze Beschreibung der Zeichnung

Die Erfindung wird nachfolgend anhand eines Ausführungsbeispiels sowie der Zeichnung näher erläutert. Es zeigen dabei:
Fig. 1 ein Stützelement mit Hohlkammerprofil in perspektivischer Ansicht;
Fig. 2 Ansicht auf ein Stützelement von vorne;
Fig. 3 Passkörpernut in der Ansicht von oben (vergrößert);
Fig. 4 Passkörpernut im Schnitt (vergrößert);
Fig. 5 Detail A gemäß Fig. 1;
Fig. 6 Passkörper mit seitlichem Versatz.

### Bester Weg zur Ausführung der Erfindung

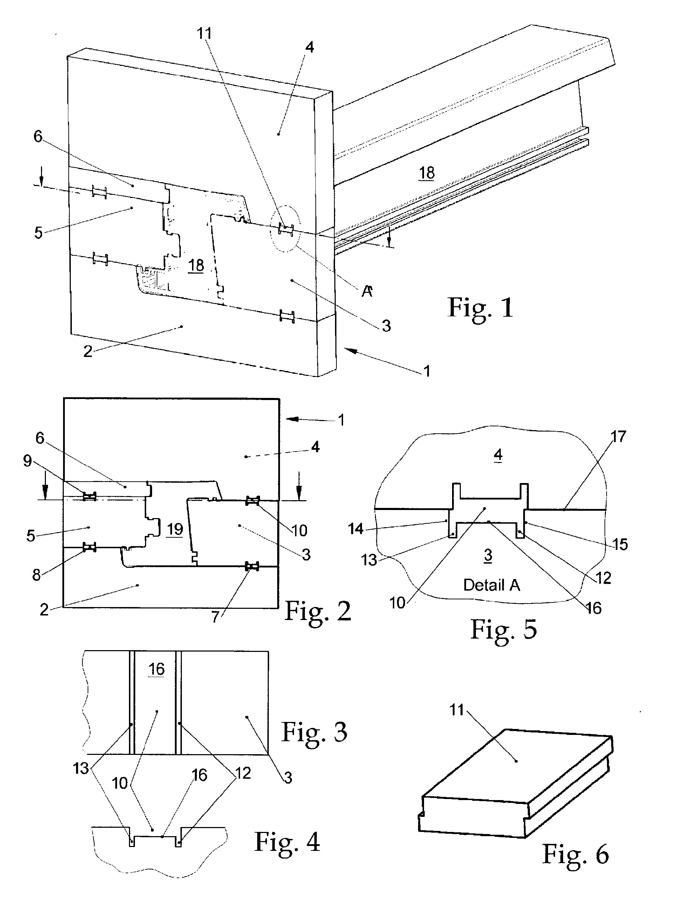

Fig. 1 zeigt ein erfindungsgemäßes Stützelement 1 einer Extrusionseinrichtung zur Herstellung von Hohlkörperprofilen 18 in perspektivischer Ansicht. Es besteht aus den einzelnen Segmenten 2 bis 6, die über standardisierte Passkörper 11 in ihrer relativen Lage zueinander (Fig. 2) fixiert sind. Das Stützelement 1 weist eine Breite und Höhe von jeweils 170 mm und eine Tiefe von 20 mm auf. In Fig. 2 ist das Stützelement 1 in der Ansicht von vorne dargestellt. Mit Bezugszeichen 19 ist der Durchbruch 19 für das in dieser Ansicht nicht gezeichnete Hohlkörperprofil 18 gekennzeichnet.

Die einzelnen Segmente 2 bis 6 sind einschließlich der Passkörpernuten 7 bis 10 im Drahterodierverfahren hergestellt worden.

In Fig. 5 ist das Detail A gemäß Fig. 1 mit der Passfedernut 10 und der Trennfläche 17 zwischen den Segmenten 4 und 3 vergrößert dargestellt. Die Passkörpernut 10 ist in die beiden Segmente 4 und 3 eingearbeitet und erstreckt sich über die gesamte Tiefe dieser Segmente 3 und 4 (Fig. 3). Die Passfedernut 10 weist seitlich Passflächen 14 und 15 auf, die mit geringer Fertigungstoleranz (ca. 10 µm) gearbeitet sind. Die seitlichen Passflächen 14 und 15 sind - wie in Fig. 5 zu erkennen - tiefer ausgeführt als die Auflagefläche 16, so dass seitlich Stichnuten 12 und 13 1,5 mm über die Auflagefläche 16 ragen. Bei einer eventuell notwendigen Nachbearbeitung der Trennfläche 17 - typisch um etwa 1/10 mm - kann dadurch die Auflagefläche 16 im gleichen Maße nachgearbeitet werden, ohne die seitlichen Passflächen 14 und 15 zu beschädigen.

Wie in Fig. 5 ebenfalls zu erkennen, ist das obere Segment 4 gegenüber dem unteren Segment 3 leicht seitlich verschoben, um die Massegleitflächen gegeneinander zu positionieren. Zur entsprechenden Fixierung dieser Segmente 4 und 3 wird ein Passkörper 11 mit entsprechendem seitlichen Versatz eingesetzt. Bezüglich der Ausführung der Passkörper mit seitlichem Versatz wird auf die EP 1 403 026 A1 verwiesen, auf deren Inhalt hiermit vollinhaltlich Bezug genommen wird.

### Legende

- 1: Stützelement
- 2: Segment
- 3: Segment
- 4: Segment
- 5: Segment
- 6: Segment
- 7: Passkörpernut
- 8: Passkörpernut
- 9: Passkörpernut
- 10: Passkörpernut
- 11: Passkörper
- 12: Stichnut
- 13: Stichnut
- 14: Passfläche
- 15: Passfläche
- 16: Auflagefläche
- 17: Trennfläche
- 18: Profil
- 19: Durchbruch

## Patentansprüche

1. Formgebendes oder stützendes, aus wenigstens zwei an einer ebenen Trennfläche (17) aneinandergrenzenden Segmenten (2-6) bestehendes Element einer Extrusionseinrichtung, insbesondere Kalibrierscheibe oder Stützelement (1), bei dem aneinandergrenzende Segmente (2-6) paarweise korrespondierende Passkörpernuten (7-10) zur Aufnahme entsprechender Passkörper (11) aufweisen, und wobei die Passkörpernuten (7-10) durch senkrecht zur Trennfläche (17) verlaufende Passflächen (14, 15) und eine parallel zur Trennfläche (17) verlaufende Auflagefläche (16) begrenzt werden, **dadurch gekennzeichnet, dass** bei wenigstens einer der Passkörpernuten (7-10) die Passflächen (14, 15) in Richtung senkrecht zur Auflagefläche (16) über die Auflagefläche (16) hinaus vertieft sind.

2. Verfahren zur Herstellung eines aus mehreren Segmenten (2-6) bestehenden formgebenden oder stützenden Elementes einer Extrusionseinrichtung nach Anspruch 1, **gekennzeichnet durch** folgende Verfahrensschritte:
• Herstellen der einzelnen Segmente (2-6) des formgebenden oder stützenden Elementes einer Extrusionseinrichtung, wobei die Passkörpernuten (7-10) und Trennflächen (17) zwischen den Segmenten (2-6) mit eingearbeitet sind und wobei bei wenigstens einer der Passkörpernuten (7-10) die Passflächen (14,15) in Richtung senkrecht zur Auflagefläche (16) über die Auflagefläche (16) hinaus vertieft sind,
• Zusammensetzen der Segmente (2-6) mittels Passkörpern (11),
• Anpassen der Höhe wenigstens eines der Segmente (2-6) durch spanende Bearbeitung einer der Trennflächen (17) dieses Segmentes (2-6) und wenigstens einer Auflagefläche (16) einer der Passkörpernuten (7-10),
• Ausrichten der Segmente (2-6) untereinander **durch** Auswahl von Passkörpern (11) aus einer Mehrzahl von Passkörpern (11) mit unterschiedlichem seitlichem Versatz.

3. Verfahren nach Anspruch 2, **dadurch gekennzeichnet, dass** die Herstellung der einzelnen Segmente (2-6) des formgebenden oder stützenden Elementes einschließlich der Passkörpernuten (7-10) durch Erodieren erfolgt.

## Claims

1. Shaping or supporting element, consisting of at least two segments (2-6) contiguous to one another at a planar parting plane (17), of an extrusion apparatus, in particular calibrating disc or supporting element (1), in which segments (2-6) contiguous to one another have keyways (7-10) matching one another in pairs and intended for reception of corresponding key elements (11), the keyways (7-10) being delimited by fitting surfaces (14, 15) running perpendicularly to the parting plane (17) and by a bearing surface (16) running parallel to the parting plane (17), **characterized in that**, in the case of at least one of the keyways (7-10), the fitting surfaces (14, 15) are recessed in the direction perpendicular to the bearing surface (16) beyond the bearing surface (16).

2. Method for producing a shaping or supporting element, consisting of a plurality of segments (2-6), of an extrusion apparatus according to Claim 1, **characterized by** the following method steps:
• production of the individual segments (2-6) of the shaping or supporting elements of an extrusion apparatus, the keyways (7-10) and parting planes (17) between the segments (2-6) also being incorporated, and, in the case of at least one of the keyways (7-10), the fitting surfaces (14, 15) being recessed in the direction perpendicular to the bearing surface (16) beyond the bearing surface (16),
• assembly of the segments (2-6) by means of key elements (11),
• adaptation of the height of at least one of the segments (2-6) by the cutting machining of one of the parting planes (17) of this segment (2-6) and at least one bearing surface (16) of one of the keyways (7-10),
• alignment of the segments (2-6) with one another by the selection of key elements (11) from a plurality of key elements (11) having a different lateral offset.

3. Method according to Claim 2, **characterized in that** the production of the individual segments (2-6) of the shaping or supporting element, including the keyways (7-10), takes place by erosion.

## Revendications

1. Élément de façonnage ou de support d'un dispositif d'extrusion, constitué d'au moins deux segments (2-6) adjacents à une surface de séparation plane (17), en particulier plaque de calibrage ou élément de support (1), dans lequel des segments (2-6) adjacents comprennent des rainures de clavette (7-10) correspondantes par paires pour recevoir des clavettes d'ajustage (11) correspondantes, et les rainures de clavette (7-10) étant limitées par des surfaces d'ajustage (14, 15) s'étendant perpendiculairement à la surface de séparation (17) et par une surface d'appui (16) s'étendant parallèlement à la surface de séparation (17), **caractérisé en ce que**, pour au moins l'une des rainures de clavette (7-10), les surfaces d'ajustage (14, 15) sont renfoncées au-delà de la surface d'appui (16) dans la direction perpendiculaire à la surface d'appui (16).

2. Procédé de fabrication d'un élément de façonnage ou de support d'un dispositif d'extrusion, constitué de plusieurs segments (2-6), selon la revendication 1, **caractérisé par** les étapes de procédé suivantes :
• fabrication des segments individuels (2-6) de l'élément de façonnage ou de support d'un dispositif d'extrusion, les rainures de clavette (7-10) et les surfaces de séparation (17) étant incorporées entre les segments (2-6) et, pour au moins l'une des rainures de clavette (7-10), les surfaces d'ajustage (14, 15) étant renfoncées au-delà de la surface d'appui (16) dans la direction perpendiculaire à la surface d'appui (16),
• assemblage des segments (2-6) au moyen de clavettes d'ajustage (11),
• ajustage de la hauteur d'au moins l'un des segments (2-6) par usinage par enlèvement de copeaux de l'une des surfaces de séparation (17) de ce segment (2-6) et d'au moins une surface d'appui (16) de l'une des rainures de clavette (7-10),
• alignement des segments (2-6) les uns par rapport aux autres par sélection de clavettes d'ajustage (11) parmi une pluralité de clavettes d'ajustage (11) de décalages latéraux différents.

3. Procédé selon la revendication 2, **caractérisé en ce que** la fabrication des segments individuels (2-6) de l'élément de façonnage ou de support, y compris des rainures de clavette (7-10), s'effectue par érosion.
